# EUROPEAN PATENT SPECIFICATION

(11) **EP 3 573 356 B1**
(45) Date of publication and mention of the grant of the patent: **28.07.2021**
(21) Application number: 18770505.8
(22) Date of filing: 23.03.2018
(51) Int. Cl.: H04W 8/04, H04W 76/25, H04W 76/27

(54) **METHOD FOR CONTROLLING STATES OF TERMINAL DEVICE, TERMINAL DEVICE, AND NETWORK DEVICE**
VERFAHREN ZUR STEUERUNG DER ZUSTÄNDE EINER ENDGERÄTEVORRICHTUNG, ENDGERÄTEVORRICHTUNG UND NETZWERKVORRICHTUNG
PROCÉDÉ DE CONTRÔLE D'ÉTATS DE DISPOSITIF TERMINAL, DISPOSITIF TERMINAL, ET DISPOSITIF DE RÉSEAU

(30) Priority: 24.03.2017 CN 201710184667
(43) Date of publication of application: 27.11.2019
(73) Proprietor: Huawei Technologies Co., Ltd., Longgang District Shenzhen, Guangdong 518129 (CN)
(72) Inventor: JIN, Yinghao, Shenzhen Guangdong 518129 (CN); YANG, Yang, Shenzhen Guangdong 518129 (CN); TAN, Wei, Shenzhen Guangdong 518129 (CN)
(74) Representative: Goddar, Heinz J.
(86) International application number: PCT/CN2018/080230
(87) International publication number: WO 2018/171724

(56) References cited:
- EP-A1- 3 454 623
- CN-A- 101 400 042
- CN-A- 101 729 327
- CN-A- 102 724 650
- CN-A- 104 284 321
- ERICSSON: "RAN area updating due to mobility in RRC_INACTIVE", 3GPP DRAFT; R2-1700894 - RAN AREA UPDATING DUE TO MOBILITY IN RRC_INACTIVE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG2, no. Athens, Greece; 20170213 - 20170217 12 February 2017 (2017-02-12), XP051211673, Retrieved from the Internet: URL:http://www.3gpp.org/ftp/Meetings_3GPP_ SYNC/RAN2/Docs/ [retrieved on 2017-02-12]
- HUAWEI HISILICON: "Discussion on 2-step RACH Procedure", 3GPP DRAFT; R2-167588, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20161114 - 20161118 13 November 2016 (2016-11-13), XP051177455, Retrieved from the Internet: URL:http://www.3gpp.org/ftp/Meetings_3GPP_ SYNC/RAN2/Docs/ [retrieved on 2016-11-13]
- "3rd Generation Partnership Project; Technical Specification Group Radio Access Network; Evolved Universal Terrestrial Radio Access (E-UTRA); Radio Resource Control (RRC); Protocol specification (Release 14)", 3GPP STANDARD ; TECHNICAL SPECIFICATION ; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V14.2.0, 23 March 2017 (2017-03-23), pages 1-721, XP051291443, [retrieved on 2017-03-23]

## Description

### TECHNICAL FIELD

This application relates to the communications field, and more specifically, to a method for controlling a status of a terminal device, a terminal device, and a network device.

### BACKGROUND

A fifth-generation (5th-Generation, 5G) mobile communications technology newly defines a radio resource control (Radio Resource Control, RRC) inactive state (inactive state), short as an inactive state. The inactive state may be considered as a state independent of an RRC connected (connected) state (connected state for short) and an RRC idle (idle) state (idle state for short); or may be considered as a substate of the connected state or the idle state. The inactive state has the following features: 1. When a terminal device is transferred from the inactive state to the connected state in an anchor base station or an anchor cell, the terminal device does not need to reactivate a link between the anchor base station or the anchor cell and a core network control plane network element. 2. Mobility of the terminal device is implemented through cell reselection rather than cell handover.

The 5G mobile communications technology further defines a radio access network (Radio Access Network, RAN)-based notification area (RAN based Notification Area, RNA). The RNA may include one or more cells. If the RNA includes a plurality of cells, the plurality of cells may be served by one base station (which may be, for example, an eNB or a gNB), or may be served by a plurality of base stations (which may include, for example, an eNB and/or a gNB). The eNB may be an evolved NodeB (evolved Node B) in a 4.5G mobile communications technology. When a terminal device in an inactive state moves inside an RNA, the terminal device may not notify a network device, but only performs cell reselection. However, when the terminal device moves to a cell outside the RNA, the terminal device needs to notify the network device, and then updates the RNA.

When the terminal device in the inactive state updates the RNA, a solution as to how to control a status of the terminal device has not been provided in the 5G mobile communications technology.

ERICSSON, "RAN area updating due to mobility in RRC_INACTIVE", 3GPP DRAFT, vol. 3GPP TSG-RAN WG2#97, no. Athens, Greece; 20170213 - 20170217, R2-1700894 discloses RAN notification area update by a UE in RRC_INACTIVE.

HUAWEI HISILICON, "Discussion on 2-step RACH Procedure", 3GPP DRAFT, vol. 3GPP TSG-RAN2 Meeting #96, no. Reno, USA, 20161114 - 20161118, R2-167588 discusses UE identity in LTE system and applicable scenarios with UE identify for NR

CN 105 898 894 A discloses method and apparatus for RRC state control. An access network device obtains RRC connected inactive state indication information of UE. When the UE leaves an RRC connected state, the access network device determines, based on the RRC connected inactive state indication information, that the UE enters an RRC connected inactive state or an RRC idle state. When determining that the UE enters the RRC connected inactive state, the access network device stores context information of the UE, and sends, to the UE, a command of entering the RRC connected inactive state, so that the UE enters the RRC connected inactive state.

3GPP Standard TS 36.331 vl4.2.0 (2017-03) "3rd Generation Partnership Project; Technical Specification Group Radio Access Network; Evolved Universal Terrestrial Radio Access (E-UTRA); Radio Resource Control (RRC); Protocol specification (Release 14)" specifies the Radio Resource Control protocol for the radio interface between UE and E-UTRAN as well as for the radio interface between RN and E-UTRAN.

### SUMMARY

This application provides methods of claims 1 and 5 for controlling a status of a terminal device, a terminal device of claim 9, a network device of claim 10, and computer-readable mediums of claim 11 and 12, to reduce signaling overheads and reduce power consumption of the terminal device.

According to a first aspect, a method for controlling a status of a terminal device is provided. The method includes: sending, by a terminal device in an inactive state, a first request message to a first network device, where the first request message includes first identifier information of the terminal device; and receiving, by the terminal device, a first response message sent by the first network device, where the first response message is used to instruct the terminal device to enter an idle state or enter the inactive state.

According to a second aspect, a method for controlling a status of a terminal device is provided. The method includes: receiving, by a first network device, a first request message sent by a terminal device in an inactive state, where the first request message includes first identifier information of the terminal device; and sending, by the first network device, a first response message to the terminal device, where the first response message is used to instruct the terminal device to enter an idle state or enter the inactive state.

According to the methods for controlling a status of a terminal device in the first aspect and the second aspect, the terminal device in the inactive state sends a request message to the first network device, the first network device instructs the terminal device to directly enter the idle state or the inactive state, and the terminal device does not need to switch to a connected state in advance, so that signaling overheads can be reduced, and power consumption of the terminal device can be reduced.

In a possible implementation of the second aspect, before the sending, by the first network device, a first response message to the terminal device, the method further includes: determining, by the first network device based on the first request message, to set the terminal device to the idle state or set the terminal device to the inactive state. In this possible implementation, the first network device determines, based on request information, a state to which the terminal device should be set, thereby more flexibly and efficiently controlling the status of the terminal device.

In a possible implementation of the second aspect, the method further includes: when determining to set the terminal device to the idle state, sending, by the first network device, a second request message to a second network device, where the second request message is used to instruct to delete a terminal device context; and receiving, by the first network device, a second response message sent by the second network device, where the second response message is used to feed back a result of deleting the terminal device context. This possible implementation is applicable to a case of determining to set the terminal device to the idle state.

In a possible implementation of the second aspect, the method further includes: when determining to set the terminal device to the inactive state, sending, by the first network device, a third request message to the second network device, where the third request message is used to instruct to request the terminal device context; and receiving, by the first network device, a third response message sent by the second network device, where the third response message is used to feed back the terminal device context. This possible implementation is applicable to a case of determining to set the terminal device to the inactive state.

In a possible implementation of the first aspect or the second aspect, the first identifier information is inactive state identifier information allocated by the second network device for the terminal device in the inactive state. In this possible implementation, in a service of the second network device, ID information of the terminal device uniquely corresponds to a context of the terminal device, and for the convenience of implementing a subsequent procedure, the first request message may carry the inactive state identifier information allocated by the second network device for the terminal device in the inactive state. The inactive state ID information of the terminal device may be access stratum (Access Stratum, AS) ID information.

In a possible implementation of the first aspect or the second aspect, when the first response message is used to instruct the terminal device to enter the inactive state, the first response message includes second identifier information allocated by the first network device to the terminal device. In this possible implementation, the first response message includes the second identifier information allocated by the first network device to the terminal device, to facilitate update of the terminal device.

In a possible implementation of the first aspect or the second aspect, when the first response message is used to instruct the terminal device to enter the inactive state, the first response message includes state indicator information, and the state indicator information is used to instruct the terminal device to enter the inactive state rather than a connected state. In this possible implementation, the terminal device is instructed to enter the inactive state in an explicit manner.

In a possible implementation of the first aspect or the second aspect, the first request message further includes at least one of second network device identifier information, anchor cell identifier information, service type information, slice indicator information, expected state information, and first cause information. In this possible implementation, the second network device identifier information and the anchor cell identifier information may assist the first network device in determining the second network device of the terminal device in the inactive state; the service type information and the slice indicator information may be used by the first network device to perform RRC layer access control; the expected state information may indicate a state that the terminal device expects to enter after sending the first request message, to help the first network device make determining; and the first cause information may indicate a cause for sending the first request message, to help the first network device make determining.

In a possible implementation of the first aspect or the second aspect, the first cause information is used to indicate that the cause is update of a radio access network RAN-based notification area RNA.

In a possible implementation of the first aspect or the second aspect, the first cause information is used to indicate that the cause is periodic update of the RNA.

The first request message may be a radio resource control RRC connection resume request message.

When the first response message is used to instruct the terminal device to enter the inactive state, the first response message may be an RRC connection resume message or an RRC connection reconfiguration message.

When the first response message is used to instruct the terminal device to enter the idle state, the first response message may be an RRC connection reject message.

A third aspect provides a terminal device, and the terminal device is in an inactive state and includes: a sending module, configured to send a first request message to a first network device, where the first request message includes first identifier information of the terminal device; and a receiving module, configured to receive a first response message sent by the first network device, where the first response message is used to instruct the terminal device to enter an idle state or enter the inactive state.

In a possible implementation of the third aspect, the first identifier information is inactive state identifier information allocated by a second network device for the terminal device in the inactive state.

In a possible implementation of the third aspect, when the first response message is used to instruct the terminal device to enter the inactive state, the first response message includes second identifier information allocated by the first network device to the terminal device.

In a possible implementation of the third aspect, when the first response message is used to instruct the terminal device to enter the inactive state, the first response message includes state indicator information, and the state indicator information is used to instruct the terminal device to enter the inactive state rather than a connected state.

In a possible implementation of the third aspect, the first request message further includes at least one of second network device identifier information, anchor cell identifier information, service type information, slice indicator information, expected state information, and first cause information.

In a possible implementation of the third aspect, the first cause information is used to indicate that a cause is update of a radio access network RAN-based notification area RNA.

In a possible implementation of the third aspect, the first cause information is used to indicate that the cause is periodic update of the RNA.

A fourth aspect provides a first network device, including: a receiving module, configured to receive a first request message sent by a terminal device in an inactive state, where the first request message includes first identifier information of the terminal device; and a sending module, configured to send a first response message to the terminal device, where the first response message is used to instruct the terminal device to enter an idle state or enter the inactive state.

In a possible implementation of the fourth aspect, the first identifier information is inactive state identifier information allocated by a second network device for the terminal device in the inactive state.

In a possible implementation of the fourth aspect, when the first response message is used to instruct the terminal device to enter the inactive state, the first response message includes second identifier information allocated by the first network device to the terminal device.

In a possible implementation of the fourth aspect, when the first response message is used to instruct the terminal device to enter the inactive state, the first response message includes state indicator information, and the state indicator information is used to instruct the terminal device to enter the inactive state rather than a connected state.

In a possible implementation of the fourth aspect, the first request message further includes at least one of second network device identifier information, anchor cell identifier information, service type information, slice indicator information, expected state information, and first cause information.

In a possible implementation of the fourth aspect, the first cause information is used to indicate that a cause is update of a radio access network RAN-based notification area RNA.

In a possible implementation of the fourth aspect, the first cause information is used to indicate that the cause is periodic update of the RNA.

In a possible implementation of the fourth aspect, the first network device further includes a processing module, configured to: before the sending module sends the first response message to the terminal device, determine, based on the first request message, to set the terminal device to the idle state or set the terminal device to the inactive state.

In a possible implementation of the fourth aspect, the sending module is further configured to: when the processing module determines to set the terminal device to the idle state, send a second request message to the second network device, where the second request message is used to instruct to delete a terminal device context; and the receiving module is further configured to receive a second response message sent by the second network device, where the second response message is used to feed back a result of deleting the terminal device context.

In a possible implementation of the fourth aspect, the sending module is further configured to: when the processing module determines to set the terminal device to the inactive state, send a third request message to the second network device, where the third request message is used to instruct to request the terminal device context; and the receiving module is further configured to receive a third response message sent by the second network device, where the third response message is used to feed back the terminal device context.

A fifth aspect provides a method for controlling a status of a terminal device, including: sending, by a terminal device in an inactive state, a first request message to a first network device, where the first request message includes first identifier information of the terminal device; and receiving, by the terminal device, a first response message sent by the first network device, where the first response message is used to instruct the terminal device to enter the inactive state to transmit a small data packet.

In a possible implementation of the fifth aspect, the first identifier information is inactive state identifier information allocated by a second network device for the terminal device in the inactive state.

In a possible implementation of the fifth aspect, when the first response message is used to instruct the terminal device to enter the inactive state, the first response message includes second identifier information allocated by the first network device to the terminal device.

In a possible implementation of the fifth aspect, when the first response message is used to instruct the terminal device to enter the inactive state, the first response message includes state indicator information, and the state indicator information is used to instruct the terminal device to enter the inactive state rather than a connected state.

In a possible implementation of the fifth aspect, the first request message further includes at least one of second network device identifier information, anchor cell identifier information, service type information, slice indicator information, expected state information, and first cause information.

In a possible implementation of the fifth aspect, the first cause information is used to indicate that a cause is transmission of the small data packet.

A sixth aspect provides a method for controlling a status of a terminal device, including: receiving, by a first network device, a first request message sent by a terminal device in an inactive state, where the first request message includes first identifier information of the terminal device; and sending, by the first network device, a first response message to the terminal device, where the first response message is used to instruct the terminal device to enter the inactive state to transmit a small data packet.

In a possible implementation of the sixth aspect, the first identifier information is inactive state identifier information allocated by a second network device for the terminal device in the inactive state.

In a possible implementation of the sixth aspect, when the first response message is used to instruct the terminal device to enter the inactive state, the first response message includes second identifier information allocated by the first network device to the terminal device.

In a possible implementation of the sixth aspect, when the first response message is used to instruct the terminal device to enter the inactive state, the first response message includes state indicator information, and the state indicator information is used to instruct the terminal device to enter the inactive state rather than a connected state.

In a possible implementation of the sixth aspect, the first request message further includes at least one of second network device identifier information, anchor cell identifier information, service type information, slice indicator information, expected state information, and first cause information.

In a possible implementation of the sixth aspect, the first cause information is used to indicate that a cause is transmission of the small data packet.

In a possible implementation of the sixth aspect, before the sending, by the first network device, a first response message to the terminal device, the method further includes: determining, by the first network device based on the first request message, to set the terminal device to the idle state or set the terminal device to the inactive state.

In a possible implementation of the sixth aspect, the third request message includes second cause information, and the second cause information is used to indicate that the cause is transmission of the small data packet; and the third response message includes an entire or a partial context of the terminal device.

In a possible implementation of the sixth aspect, the third request message includes second cause information, and the second cause information may further include bearer indicator information corresponding to the small data packet, where the bearer indicator information indicates a bearer corresponding to the small data packet.

A seventh aspect provides a terminal device, and the terminal device is in an inactive state and includes: a sending module, configured to send a first request message to a first network device, where the first request message includes first identifier information of the terminal device; and a receiving module, configured to receive a first response message sent by the first network device, where the first response message is used to instruct the terminal device to enter the inactive state to transmit a small data packet.

An eighth aspect provides a first network device, including: a receiving module, configured to receive a first request message sent by a terminal device in an inactive state, where the first request message includes first identifier information of the terminal device; and a sending module, configured to send a first response message to the terminal device, where the first response message is used to instruct the terminal device to enter the inactive state to transmit a small data packet.

A ninth aspect provides a method for controlling a status of a terminal device, including: receiving, by a second network device, a second request message sent by a first network device, where the second request message is used to instruct to delete a terminal device context; sending, by the second network device, a second response message to the first network device, where the second response message is used to feed back a result of deleting the terminal device context.

A tenth aspect provides a second network device, including: a receiving module, configured to receive a second request message sent by a first network device, where the second request message is used to instruct to delete a terminal device context; a sending module, configured to send a second response message to the first network device, where the second response message is used to feed back a result of deleting the terminal device context.

An eleventh aspect provides a method for controlling a status of a terminal device, including: receiving, by a second network device, a third request message sent by a first network device, where the third request message is used to instruct to request a terminal device context, the third request message includes second cause information, and the second cause information is used to indicate that a cause is transmission of a small data packet; and sending, by the second network device, a third response message to the first network device, where the third response message is used to feed back the terminal device context, including an entire context or a partial context of the terminal device.

A twelfth aspect provides a second network device, including: a receiving module, configured to receive a third request message sent by a first network device, where the third request message is used to instruct to request a terminal device context, the third request message includes second cause information, and the second cause information is used to indicate that a cause is transmission of a small data packet; and a sending module, configured to send a third response message to the first network device, where the third response message is used to feed back the terminal device context, including an entire context or a partial context of the terminal device.

According to a thirteenth aspect, a terminal device is provided, and the terminal device includes a processor, a memory, and a transceiver, to perform the method according to the first aspect and the fifth aspect and any possible corresponding implementation thereof.

According to a fourteenth aspect, a first network device is provided, and the first network device includes a processor, a memory, and a transceiver, to perform the method according to the second aspect and the sixth aspect and any possible corresponding implementation thereof.

According to a fifteenth aspect, a second network device is provided, and the second network device includes a processor, a memory, and a transceiver, to perform the method according to the eleventh aspect and any possible corresponding implementation thereof.

According to a sixteenth aspect, a computer readable medium is provided, and configured to store a computer program. The computer program includes an instruction used to perform the method according to the first aspect and the fifth aspect and any possible corresponding implementation thereof.

According to a seventeenth aspect, a computer readable medium is provided, and configured to store a computer program. The computer program includes an instruction used to perform the method according to the second aspect and the sixth aspect and any possible corresponding implementation thereof.

According to an eighteenth aspect, a computer readable medium is provided, and configured to store a computer program. The computer program includes an instruction used to perform the method according to the eleventh aspect and any possible corresponding implementation thereof.

### BRIEF DESCRIPTION OF DRAWINGS

FIG. 1 is a schematic block diagram of a system architecture to which an embodiment of this application is applied;
FIG. 2 is a schematic flowchart of updating an RNA in 4G and 4.5G mobile communications technologies;
FIG. 3 is a schematic flowchart of a method for controlling a status of a terminal device according to an embodiment of this application;
FIG. 4 is a schematic flowchart of a method for controlling a status of a terminal device according to another embodiment of this application;
FIG. 5 is a schematic flowchart of a method for controlling a status of a terminal device according to another embodiment of this application;
FIG. 6 is a schematic flowchart of a method for controlling a status of a terminal device according to another embodiment of this application;
FIG. 7 is a schematic flowchart of a method for controlling a status of a terminal device according to another embodiment of this application;
FIG. 8 is a schematic block diagram of a terminal device according to an embodiment of this application;
FIG. 9 is a schematic block diagram of a terminal device according to another embodiment of this application;
FIG. 10 is a schematic block diagram of a first network device according to an embodiment of this application; and
FIG. 11 is a schematic block diagram of a first network device according to another embodiment of this application.

### DESCRIPTION OF EMBODIMENTS

The following describes technical solutions of this application with reference to accompanying drawings.

It should be understood that, the technical solutions in this application may be applied to a 5G mobile communications system.

A terminal (Terminal) device in this application may be referred to as a terminal or user equipment (User Equipment, UE), or may be referred to as a mobile terminal (Mobile Terminal), mobile user equipment, and the like. The terminal device can communicate with one or more core networks over a radio access network (for example, a Radio Access Network, RAN). The user equipment may be a mobile terminal, for example, a mobile phone (or referred to as a "cellular" phone) and a computer having a mobile terminal. For example, the user equipment may be a portable, a pocket-sized, a handheld, a computer's built-in, or an in-vehicle mobile apparatus, which exchange languages and/or data with the radio access network.

A network device in this application is a device configured to communicate with a mobile device in a 5G mobile communications technology. The network device may be an eNB applied to evolved long term evolution (evolved Long Term Evolution, eLTE) in a 4.5G mobile communications technology, or a gNB proposed in the 5G mobile communications technology.

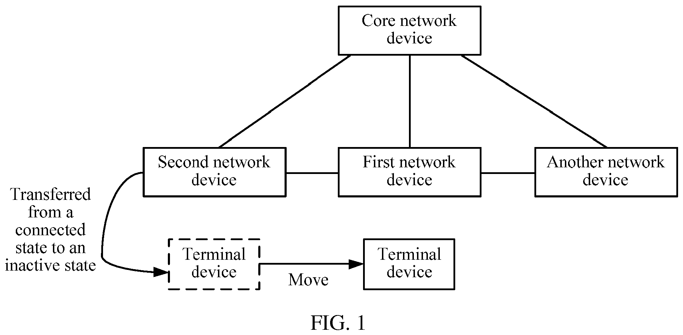

FIG. 1 is a schematic block diagram of a system architecture to which an embodiment of this application is applied. In FIG. 1, a radio access network device that originally serves a terminal device UE is a first network device. Served by a second network device, the UE is transferred from an RRC connected state to an RRC inactive state, and in this case, the second network device is referred to as an anchor network device. The anchor network device reserves UE context information (where the terminal device context is consistent with a terminal device context in the RRC connected state or is a partial terminal device context in the RRC connected state). Then, the UE moves into a service range of the first network device, and the first network device becomes a new serving network device of the UE. The UE is downlink synchronous with the serving network device, and receives a broadcast signal of the serving network device. Moreover, the UE interacts, by using the serving network device, with a core network (Core Network, CN), and especially interacts with a control plane function of the core network, for example, an access and mobility management function (Access and Mobility Management Function, AMF). The AMF is mainly used to provide a user with a mobility management and access management function.

In this embodiment of this application, a serving cell (a network device, and a base station) is a cell (a network device, and a base station) in which the terminal device is currently located. The terminal device is downlink synchronous with the serving cell (the network device, and the base station), and receives a broadcast signal of the serving cell (the network device, and the base station), and the terminal interacts with a network by using the serving cell (the network device, and the base station).

In this embodiment of this application, an anchor cell (a network device, and a base station) means that in this cell (the network device, and the base station), the terminal device is transferred from the RRC connected state to an RRC inactive state, and the anchor network device or the anchor base station reserves a terminal device context (which is consistent with a context in the RRC connected state or is a partial context in the RRC connected state).

It should be understood that, the first network device herein may be a 5G base station gNB, or an E-UTRAN base station, namely, an eNB, that can be connected to a 5G core network and can support the RRC inactive state or a similar state. Similarly, the second network device may also be a gNB or an eNB. In the example shown in FIG. 1, the first network device and the second network device may further communicate with another network device (for example, a third network device). The architecture shown in FIG. 1 is only an example, which does not impose a limitation on the embodiments of this application.

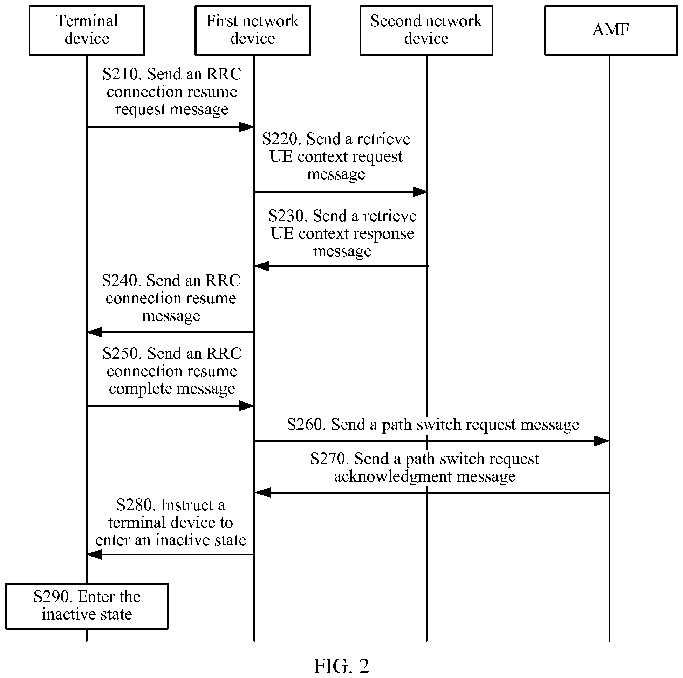

In an RNA update procedure in 4G and 4.5G mobile communications technologies, a terminal device in an inactive state is first transferred to a connected state by a network device, and then the terminal device is transferred back to the inactive state from the connected state based on communication between the terminal device and the network device, for example, when the terminal device does not have data to be transmitted. Specifically, FIG. 2 is a schematic flowchart of updating an RNA in the 4G and 4.5G mobile communications technologies. As shown in FIG. 2, the updating an RNA includes the following steps.

S210. During update of an RNA, a terminal device in an inactive state sends an RRC connection resume request (RRC Connection Resume Request) message to a first network device (new serving network device). Correspondingly, the first network device receives the RRC connection resume request message sent by the terminal device in the inactive state.

S220. The first network device sends a retrieve UE context request (Retrieve UE Context Request) message to a second network device (anchor network device). Correspondingly, the second network device receives the retrieve UE context request message sent by the first network device.

S230. The second network device sends a retrieve UE context response (Retrieve UE Context Response) message to the first network device. Correspondingly, the first network device receives the retrieve UE context response message sent by the second network device.

S240. The first network device sends an RRC connection resume (RRC Connection Resume) message to the terminal device. Correspondingly, the terminal device receives the RRC connection resume message sent by the first network device.

S250. The terminal device sends an RRC connection resume complete (RRC Connection Resume Complete) message to the first network device. Correspondingly, the first network device receives the RRC connection resume complete message sent by the terminal device. In this case, the terminal device enters a connected state.

S260. The first network device sends a path switch request (Path Switch Request) message to an AMF. Correspondingly, the AMF receives the path switch request message sent by the first network device.

S270. The AMF sends a path switch request acknowledgement (Path Switch Request ACK) message to the first network device. Correspondingly, the first network device receives the path switch request message sent by the AMF.

S280. When the terminal device does not have data to be transmitted, the first network device instructs the terminal device to enter the inactive state.

S290. The terminal device enters the inactive state.

In this process, state transfer performed by the terminal device twice not only causes redundant signaling overheads, but also wastes power consumption of the terminal device.

Similarly, when the terminal device in the inactive state needs to transmit a small data packet, a same case also exists, and details are not described herein again.

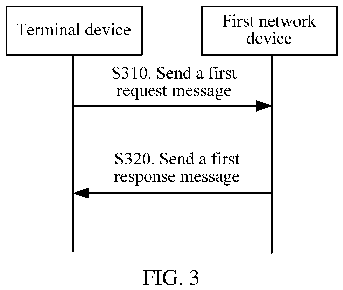

Based on the foregoing problems, as shown in FIG. 3, an embodiment of this application provides a method 300 for controlling a status of a terminal device. When interaction only between a terminal device and a first network device is considered, the method 300 includes the following steps.

S310. A terminal device in an inactive state sends a first request message to a first network device, where the first request message includes first identifier information of the terminal device. Correspondingly, the first network device receives the first request message sent by the terminal device in the inactive state.

S320. The terminal device receives a first response message sent by the first network device, where the first response message is used to instruct the terminal device to enter an idle state or enter the inactive state. Correspondingly, the first network device sends the first response message to the terminal device.

According to the method for controlling a status of a terminal device in this embodiment of this application, the terminal device in the inactive state sends a request message to the first network device, the first network device instructs the terminal device to directly enter the idle state or the inactive state, and the terminal device does not need to switch to a connected state in advance, so that signaling overheads can be reduced, and power consumption of the terminal device can be reduced.

Optionally, the first request message may further include first cause information, and the first cause information indicates that the first request message is used for RNA update or periodic RNA update.

The method for controlling a status of a terminal device in this embodiments of this application is described in detail below with reference to several specific embodiments.

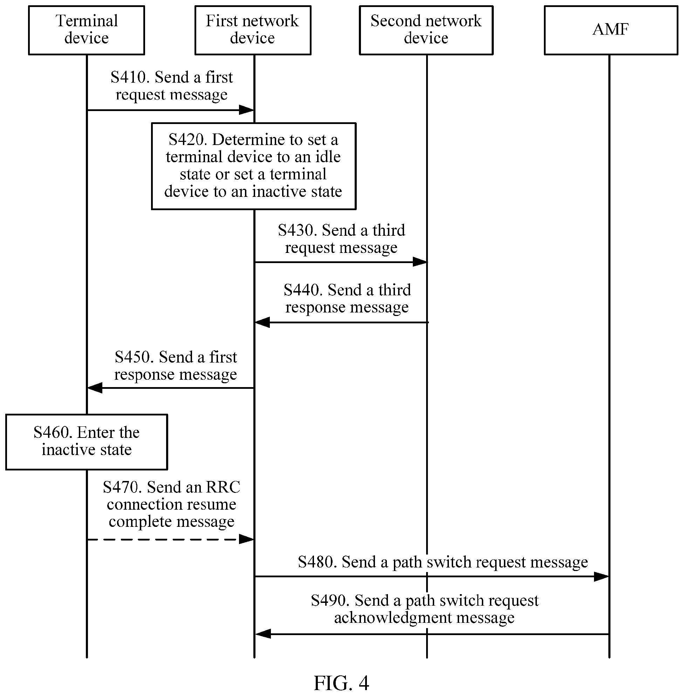

FIG. 4 is a schematic flowchart of a method 400 for controlling a status of a terminal device according to an embodiment of this application. The method 400 shown in FIG. 4 is applicable to an RNA update scenario. A terminal device in an inactive state moves from an original serving radio access network device to a new serving radio access network (NEW Serving RAN, NSR) device, that is, a service range of a first network device, and performs cell reselection. In FIG. 4, the original serving radio access network device is referred to as an anchor radio access network (Anchor RAN, AR) device, namely, a second network device. An AMF also participates in interaction. The method 400 includes the following steps.

S410. The terminal device in the inactive state sends a first request message to the first network device. Correspondingly, the first network device receives the first request message sent by the terminal device in the inactive state. The first request message may be a radio resource control RRC connection resume request (RRC Connection Resume Request) message. The first identifier information may be inactive state identifier (ID) information allocated by the second network device to the terminal device in the inactive state. An inactive state identifier of the terminal device is context information that can uniquely identify the terminal in the inactive state in an AR/AC of the terminal in the inactive state. Optionally, the inactive state identifier information of the terminal device may further indicate, to an RAN side, the AR/AC of the terminal device in the inactive state. For example, when the second network device is an anchor network device of the terminal device, the inactive state identifier information allocated by the second network device to the terminal device may uniquely correspond to a context of the terminal device. Optionally, the first network device may determine, based on the inactive state identifier information provided by the terminal device in the inactive state, that the second network device is the AR of the terminal. The inactive state identifier information is access stratum (Access Stratum, AS) ID information.

Optionally, in this embodiment of this application, the first request message may further include at least one of second network device identifier information, anchor cell identifier information, service type information, slice indicator information, expected state information, and first cause information.

Specifically, the first request message may further include the second network device identifier information (for example, AR ID information) or the anchor cell (Anchor Cell, AC) identifier information. These two types of ID information may be used to assist the first network device (that is, the NSR) in determining the AR or the AC of the terminal device in the inactive state. For example, when the NSR and the AR are network devices in an inter radio access technology (Inter Radio Access Technologies, Inter-RAT) system, the NSR cannot determine the AR or the AC of the terminal device in the inactive state based on the ID information of the terminal device. Therefore, the ID information of the AR or the ID information of the AC are required to assist in determining.

The first request message may further include service type (service type) information. The service type information may be used by the NSR to perform RRC layer access control. For example, compared with a mobile broadband (Mobile BroadBand, MBB) service, an ultra-reliable low latency communications (Ultra-Reliable Low latency Communications, URLLC) service has a higher access priority.

The first request message may further include the slice indicator information, and the slice indicator information is network slice indicator information, whose function is similar to that of the service type information. The network slice indicator information is identifier information of a network slice with which the terminal device intends to communicate and/or indicates an AMF corresponding to a network slice with which the terminal device intends to communicate. Optionally, the network slice indicator information may be represented by using at least one of the following parameters:

### First, Network slice identifier information:

1. Network slice type information. For example, the network slice type information may indicate network slice types such as an enhanced mobile broadband service (enhanced Mobile BroadBand, eMBB), URLLC, and massive machine type communication (massive Machine Type Communication, mMTC). Optionally, the network slice type information may further indicate an end-to-end network slice type, including a RAN-to-CN network slice type; or may indicate a RAN-side network slice type or a CN-side network slice type.
2. Service type information, related to a specific service. For example, the service type information may indicate service features such as a video service, an Internet of Vehicles service, and a voice service, or specific service information.
3. Tenant (tenant) information, used to indicate information about a client that creates or rents the network slice, for example, Tencent and the State Grid Corporation of China.
4. User group information, used to indicate group information for grouping users based on a particular feature, for example, a user level.
5. Slice group information, used to instruct to group network slices according to a particular feature or according to another criterion. For example, all network slices that a terminal device can access may be used as a slice group.
6. Network slice instance information, used to indicate an identifier of an instance created for the network slice and feature information. For example, an identifier may be allocated to a network slice instance, where the identifier is used to indicate the network slice instance; or the network slice instance may be mapped to a new identifier based on the identifier of the network slice instance, where the new identifier associates with the network slice instance, and a recipient can identify, based on the identifier, a specific network slice instance indicated by the identifier.
7. Dedicated core network (Dedicated Core Network, DCN) identifier. The identifier is used to uniquely indicate a dedicated core network in an LTE system or an eLTE system, for example, a dedicated core network in Internet of Things. Optionally, the DCN identifier may be mapped to a network slice identifier, and the network slice identifier may be obtained through mapping that is performed by using the DCN identifier, or the DCN identifier may be obtained through mapping that is performed by using the network the slice identifier.

Second, single network slice selection assistance information (Single Network Slice Selection Assistance information, S-NSSAI). The S-NSSAI includes at least slice type/service type (Slice/Service type, SST) information, and optionally, may further include slice differentiator information (Slice Differentiator, SD). The SST information is used to indicate a network slice behavior, for example, a network slice feature and a service type. The SD information is supplementary information of the SST, and if the SST is implemented pointing to a plurality of network slices, the SD may correspond to a unique network slice instance.

Third, S-NSSAI group information, used to instruct to perform grouping according to a particular feature. For example, all network slices of a common AMF that the terminal device can access are used as an S-NSSAI group.

Fourth, temporary identifier (Temporary ID): The temporary identifier information is allocated by the AMF to a terminal device registered with a CN side, and the temporary ID may uniquely point to an AMF.

The first request message may further include the expected state information. The expected state information may indicate that the terminal device expects to enter a connected state, an idle state, or an inactive state after sending the first request message.

The first request message may further include the first cause information. In this embodiment of this application, the first cause information may be used to indicate that a cause is update of a radio access network RAN-based notification area RNA. In other embodiments, the first cause information may alternatively be used to indicate that the cause is periodic update of the RNA, or used to indicate that the cause is transmission of a small data packet, which is to be described in the following embodiments.

S420. The first network device determines, based on the first request message, to set the terminal device to an idle state or set the terminal device to the inactive state. Specifically, whether to set the terminal device to the idle state or the inactive state may be determined based on the following information. First, if the first request message includes the expected state information, refer to content of the expected state information. Second, determining may be performed based on resource usage. For example, when an NSR resource is insufficient to maintain the terminal device in the inactive state, the terminal device is set to the idle state. For another example, determining may be performed based on a radio resource management (Radio Resource Management, RRM) policy. When the terminal device temporarily has no service, and the NSR has sufficient resources (for example, storage resources), the terminal device may be set to the inactive state. Third, determining is performed based on whether the NSR supports the inactive state. When the NSR does not support the inactive state, the NSR can set the terminal device to the idle state only. Fourth, if the AR of the terminal device and the NSR are network devices in the Inter-RAT, the NSR sets the terminal device to the idle state.

In this embodiment of this application, only a case in which it is determined to set the terminal device to the inactive state is described, and a case in which it is determined to set the terminal device to the idle state is described in the following embodiments. When it is determined to set the terminal device to the inactive state, in S430, the first network device sends a third request message to the second network device, where the third request message is used to instruct to request a terminal device context. Correspondingly, the second network device receives the third request message sent by the first network device. Specifically, the third request message may be a retrieve UE context request (Retrieve UE Context Request) message. The retrieve UE context request message may include second cause information. The second cause (cause) information may be used to indicate that the cause is RNA update, to be differentiated from transmission of a small data packet, and the like. For example, content of the second cause information may be set to "other", "RNA update (update)", or the like.

S440. The second network device sends a third response message to the second network device, where the third response message is used to feed back the terminal device context. Correspondingly, the first network device receives the third response message sent by the second network device. Specifically, the third response message may be a retrieve UE context response (Retrieve UE Context Response) message.

S450. When determining to set the terminal device to the inactive state, the first network device sends a first response message to the terminal device. Correspondingly, the terminal device receives the first response message sent by the first network device. The first response message may be used to instruct the terminal device to perform reconfiguration, for example, reconfiguration on a radio bearer, reconfiguration on a security algorithm, or reconfiguration on an inactive state identifier, and instruct the terminal to enter the inactive state after the reconfiguration is completed. The first response message may be an RRC connection resume (RRC Connection Resume) message or an RRC connection reconfiguration (RRC Connection Reconfiguration) message.

Specifically, the first response message may instruct, in two manners, the terminal to enter the inactive state after the reconfiguration is completed. The first one is an implicit manner: The first response message includes only second identifier information allocated by the first network device to the terminal device, for example, the second identifier information may be inactive state identifier information. The inactive state identifier information is AS identifier information. After receiving the second identifier information, the terminal device finds that the second identifier information is inconsistent with the inactive state identifier information (the first identifier information) reserved earlier, and considers that the network side still expects the terminal device to anchor in the inactive state. Therefore, the terminal device replaces the first identifier information with the second identifier information. The second one is an explicit manner: The first response message includes state indicator information, and the state indicator information is used to instruct the terminal device to directly enter the inactive state rather than the connected state. Optionally, the first response message may further include the second identifier information. For example, the state indicator information may be suspend indicator (suspend indicator) information.

For example, an ASN.1 form (pseudocode) of an RNA corresponding to a possible implicit manner may be as follows.

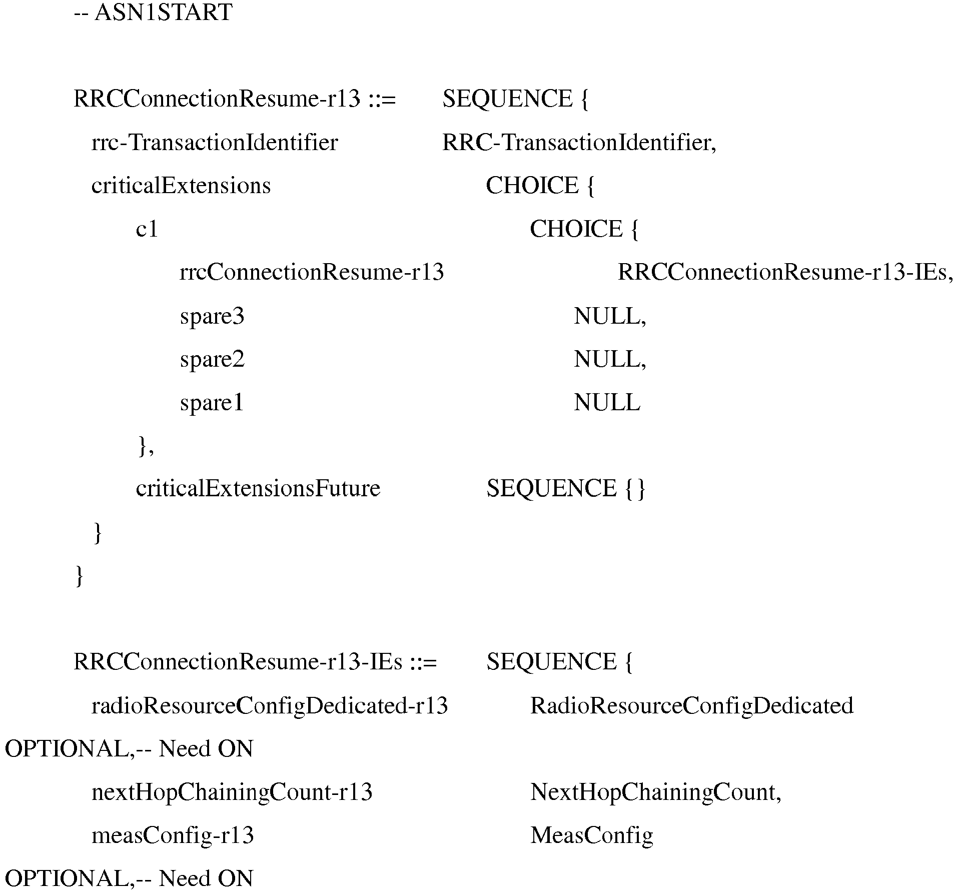

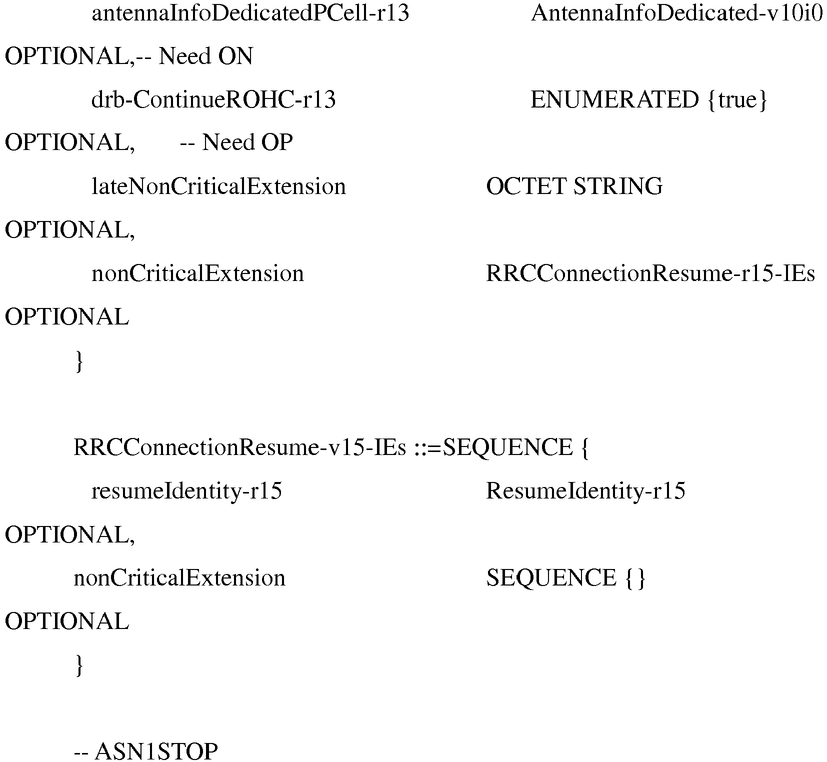

For example, an ASN.1 form (pseudocode) of an RNA corresponding to a possible explicit manner may be as follows.

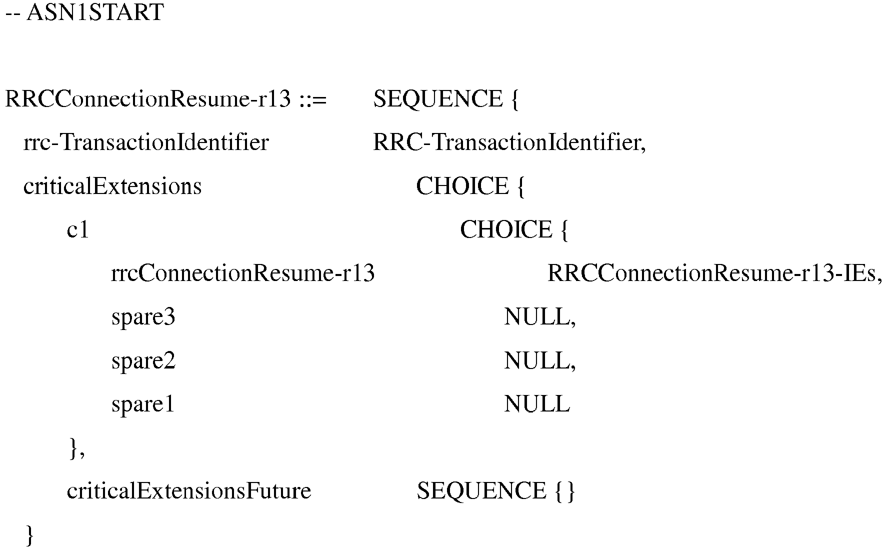

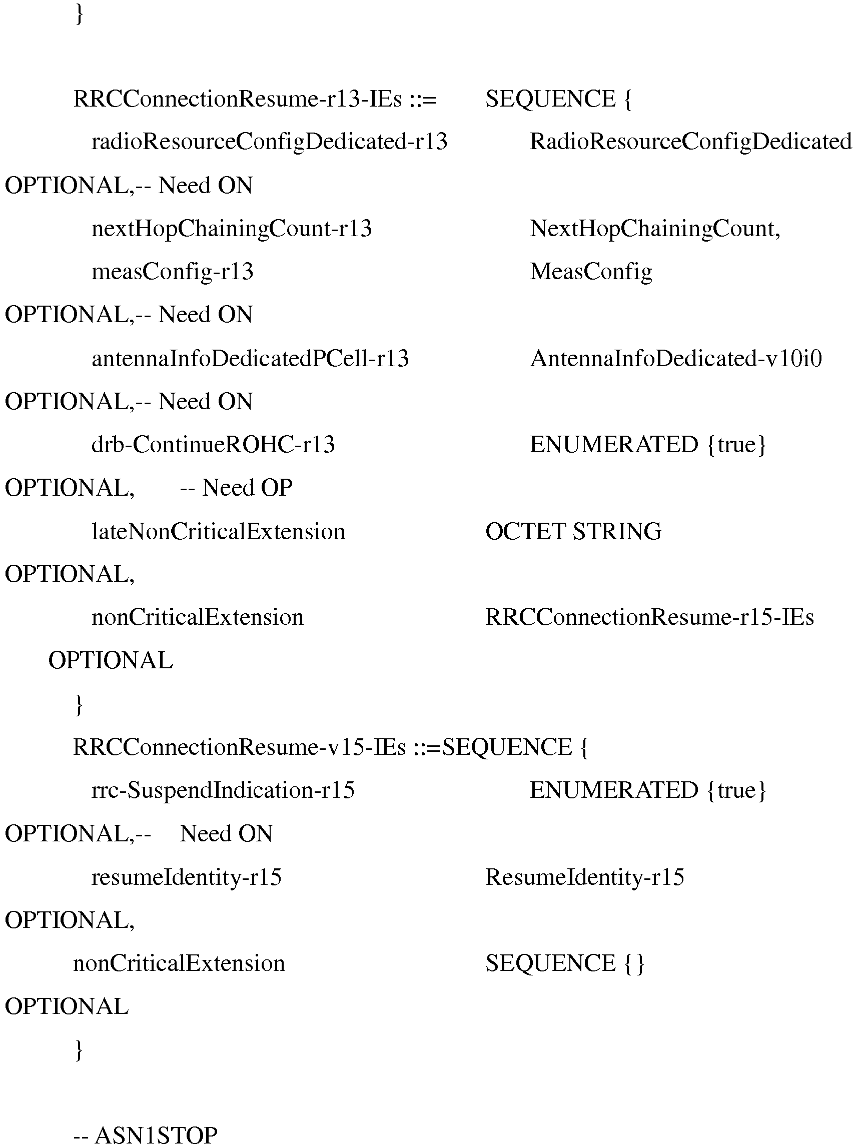

S460. The terminal device performs corresponding configuration based on the first response message in S450, enters the inactive state, and replaces the stored inactive state identifier information of the terminal device with the second identifier information.

S470. The terminal device sends an RRC connection resume complete (RRC Connection Resume Complete) message to the first network device. Optionally, the RRC connection resume complete message may include state acknowledgement information, which indicates that the terminal device has entered the inactive state. It should be noted that, S470 is an optional step, and in some embodiments, this step may not be performed.

S480. The first network device sends a path switch request (Path Switch Request) message to an AMF. Correspondingly, the AMF receives the path switch request message sent by the first network device.

S490. The AMF sends a path switch request acknowledgement (Path Switch Request ACK) message to the first network device. Correspondingly, the first network device receives the path switch request message sent by the AMF.

This embodiment of this application describes in detail that during update of the RNA, the terminal device in the inactive state directly enters the inactive state, and does not need to switch to the connected state in advance, so that signaling overheads can be reduced, and power consumption of the terminal device can be reduced.

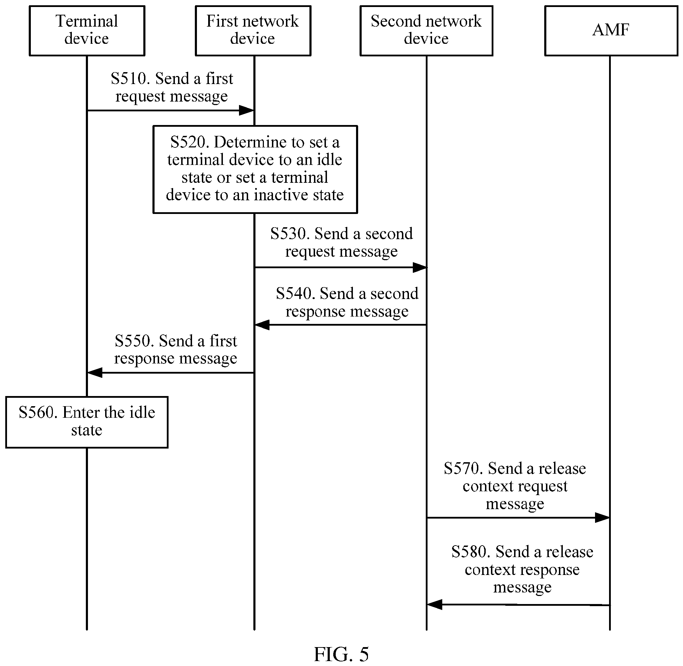

FIG. 5 is a schematic flowchart of a method 500 for controlling a status of a terminal device according to another embodiment of this application. The method 500 shown in FIG. 5 is applicable to an RNA update scenario, namely, a case in which a first network device determines, based on the first request message, to set the terminal device to an idle state.

S510 is similar to S410, and details are not described herein again.

S520. The first network device determines, based on the first request message, to set the terminal device to an idle state or set the terminal device to the inactive state. In this embodiment of this application, only a case in which the terminal device is determined to be set to the idle state is described.

When determining to set the terminal device to the idle state, in S530, the first network device sends a second request message to a second network device, where the second request message is used to instruct to delete a terminal device context. Correspondingly, the second network device receives the second request message sent by the first network device. Specifically, the second request message may be a retrieve UE context release request (Retrieve UE Context Release Request) message.

S540. The second network device sends a second response message to the first network device, where the second response message is used to feed back a result of deleting the terminal device context. Correspondingly, the first network device receives the second response message sent by the second network device. Specifically, the second response message may be a retrieve UE context release response (Retrieve UE Context Release Response) message.

S550. When determining to set the terminal device to the idle state, the first network device sends a first response message to the terminal device. Correspondingly, the terminal device receives the first response message sent by the first network device. The first response message may be used to instruct the terminal device to enter the idle state. The first response message may be an RRC connection reject (RRC Connection Reject) message.

S560. The terminal device performs corresponding configuration based on the first response message in S550, and enters the idle state.

The second network device executes a terminal device context release procedure between the second network device and the AMF. S570. The second network device sends a release context request (Release Context Request) message to the AMF. Correspondingly, the AMF receives the release context request message sent by the second network device.

S580. The AMF sends a release context response (Release Context Response) message to the second network device. Correspondingly, the second network device receives the release context response message sent by the AMF.

This embodiment of this application describes in detail that during update of the RNA, the terminal device in the inactive state directly enters the idle state, and does not need to switch to a connected state in advance, so that signaling overheads can be reduced, and power consumption of the terminal device can be reduced.

The following further describes a case of periodic update of an RNA. The periodic update of an RNA means that a terminal device still remains in a service range of an original base station (original network device), and is periodic RNA update of a same network device.

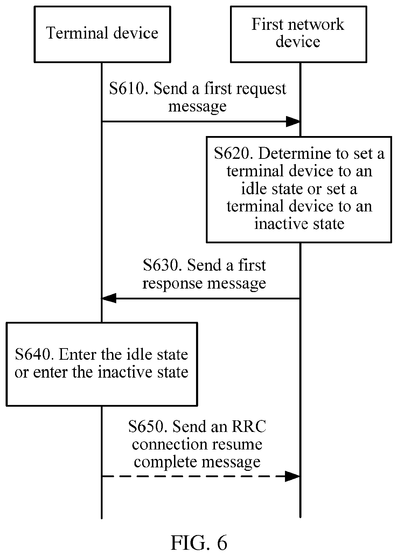

FIG. 6 is a schematic flowchart of a method 600 for controlling a status of a terminal device according to another embodiment of this application. The method 600 shown in FIG. 6 is applicable to a periodic RNA update scenario, and a first network device is an anchor network device and also a serving network device of a terminal device.

S610 is similar to S410, and details are not described herein again.

S620. The first network device determines, based on the first request message, to set the terminal device to an idle state or set the terminal device to the inactive state. A determining manner is similar to S420, and details are not described herein again.

S630. The first network device sends a first response message to the terminal device. Correspondingly, the terminal device receives the first response message sent by the first network device. When the terminal device is determined to be set to the idle state, the first response message may be used to instruct the terminal device enter the idle state. The first response message may be an RRC connection reject (RRC Connection Reject) message. When the terminal device is determined to be set to the inactive state, the first response message may be used to instruct the terminal device enter the inactive state. The first response message may be an RRC connection resume (RRC Connection Resume) message or an RRC connection reconfiguration (RRC Connection Reconfiguration) message.

S640. The terminal device performs corresponding configuration based on the first response message in S630, and enters the idle state or the inactive state.

S650. When the terminal device enters the inactive state, the terminal device may send an RRC connection resume complete (RRC Connection Resume Complete) message to the first network device. Optionally, the RRC connection resume complete message may include state acknowledgement information, which indicates that the terminal device has entered the inactive state.

This embodiment of this application describes in detail that during periodic update of the RNA, the terminal device in the inactive state directly enters the idle state or the inactive state, and does not need to switch to a connected state in advance, so that signaling overheads can be reduced, and power consumption of the terminal device can be reduced.

An embodiment of this application provides a method for controlling a status of a terminal device. The method is performed by a terminal device and includes: sending, by the terminal device in an inactive state, a first request message to a first network device, where the first request message includes first identifier information of the terminal device; and receiving, by the terminal device, a first response message sent by the first network device, where the first response message is used to instruct the terminal device to enter the inactive state to transmit a small data packet.

Correspondingly, an embodiment of this application further provides a method for controlling a status of a terminal device. The method is performed by a first network device and includes: receiving, by the first network device, a first request message sent by a terminal device in an inactive state, where the first request message includes first identifier information of the terminal device; and sending, by the first network device, a first response message to the terminal device, where the first response message is used to instruct the terminal device to enter the inactive state to transmit a small data packet.

Optionally, in an embodiment, the first identifier information is identifier information allocated by a second network device for the terminal device in the inactive state.

Optionally, in an embodiment, when the first response message is used to instruct the terminal device to enter the inactive state, the first response message includes second identifier information allocated by the first network device to the terminal device.

Optionally, in an embodiment, when the first response message is used to instruct the terminal device to enter the inactive state, the first response message includes state indicator information, and the state indicator information is used to instruct the terminal device to enter the inactive state rather than a connected state.

Optionally, in an embodiment, the first request message further includes at least one of second network device identifier information, anchor cell identifier information, service type information, slice indicator information, expected state information, and first cause information.

Optionally, in an embodiment, the first cause information is used to indicate that a cause is transmission of a small data packet.

Optionally, in an embodiment, before the sending, by the first network device, a first response message to the terminal device, the method further includes: determining, by the first network device based on the first request message, to set the terminal device to an idle state or set the terminal device to the inactive state.

Optionally, in an embodiment, the third request message includes second cause information, and the second cause information is used to indicate that a cause is transmission of a small data packet; and the third response message includes an entire or a partial context of the terminal device.

Optionally, in an embodiment, the third request message includes second cause information, and the second cause information may further include bearer indicator information corresponding to the small data packet, where the bearer indicator information indicates a bearer corresponding to the small data packet.

The following describes, by using a specific embodiment, application of the method in this embodiment of this application in transmission of a small data packet.

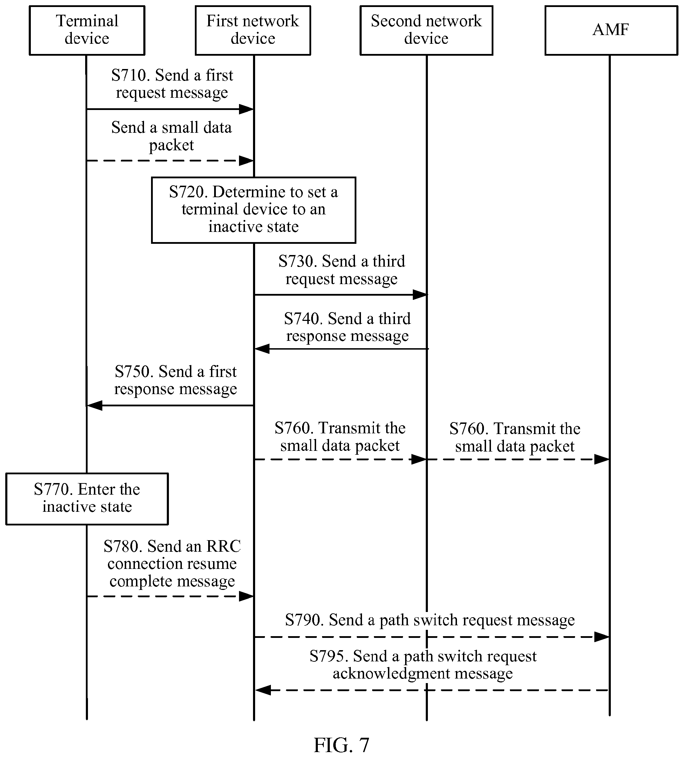

FIG. 7 is a schematic flowchart of a method 700 for controlling a status of a terminal device according to an embodiment of this application. In the method 700 shown in FIG. 7, a terminal device in an inactive state moves from an original serving radio access network device to a new serving radio access network (NEW Serving RAN, NSR) device, that is, a service range of a first network device, and performs cell reselection. In FIG. 7, the original serving radio access network device is referred to as an anchor radio access network (Anchor RAN, AR) device, namely, a second network device. An AMF also participates in interaction. The method 700 includes the following steps.

S710 is similar to S410, and details are not described herein again. A difference is that in S710, a small data packet can also be sent along with the first request message. The first request message may include first cause information. The first cause information is used to indicate that a cause is transmission of a small data packet.

S720. The first network device determines, based on the first request message, that the terminal device may transmit a small data packet in the inactive state, and still remains in the inactive state after the small data packet is transmitted.

S730. The first network device sends a third request message to the second network device, where the third request message is used to instruct to request a terminal device context. Correspondingly, the second network device receives the third request message sent by the first network device. Specifically, the third request message may be a retrieve UE context request (Retrieve UE Context Request) message. The retrieve UE context request message may include second cause information. The second cause (cause) information may be used to indicate that the cause is transmission of a small data packet. The second cause information may further include bearer indicator information corresponding to the small data packet, where the bearer indicator information indicates a bearer corresponding to the small data packet.

S740. The second network device sends a third response message to the first network device, where the third response message is used to feed back the terminal device context. Correspondingly, the first network device receives the third response message sent by the second network device. Specifically, the third response message may be a retrieve UE context response (Retrieve UE Context Release Response) message. The third response message may include an entire context of the terminal device. The third response message may alternatively include a partial context of the terminal device. The partial context may be determined by the second network device based on the bearer indicator information corresponding to the small data packet. For example, the partial context of the terminal device may include, protocol stack configuration information of a bearer corresponding to the small data packet, and/or protocol stack status information (for example, a current radio link control (Radio Link Control, RLC) frame number) of a bearer corresponding to the small data packet. This is not limited in this embodiment of this application.

S750. The first network device sends a first response message to the terminal device. Correspondingly, the terminal device receives the first response message sent by the first network device. The first response message may be used to instruct the terminal device to enter the inactive state. The first response message may be an RRC connection resume (RRC Connection Resume) message or an RRC connection reconfiguration (RRC Connection Reconfiguration) message.

S760. Transmit the small data packet through such a link: the first network device -> the second network device -> a core network.

Subsequent S770 to S795 are similar to S460 to S490, and details are not described herein again. It should be noted that, S780 to S795 are optional steps, and in some embodiments, these steps may not be performed.

This embodiment of this application describes in detail that when the small data packet is transmitted, the terminal device in the inactive state directly enters the inactive state, and does not need to switch to a connected state in advance, so that signaling overheads can be reduced, and power consumption of the terminal device can be reduced.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

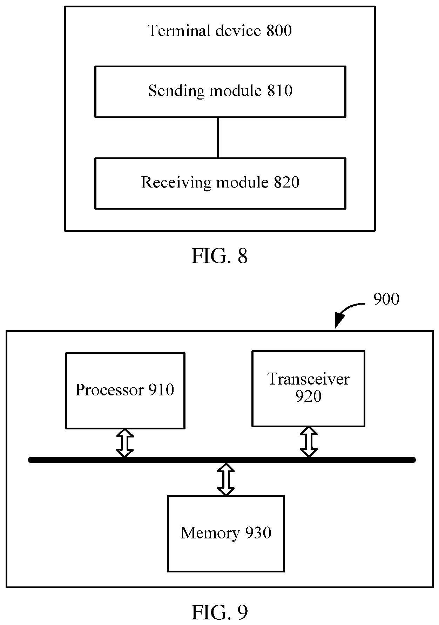

The methods for controlling a status of a terminal device in the embodiments of this application are described in detail above with reference to FIG. 1 to FIG. 7, and the terminal device and the network device in the embodiments of this application are described in detail below with reference to FIG. 8 to FIG. 11.

FIG. 8 is a schematic block diagram of a terminal device 800 according to an embodiment of this application. As shown in FIG. 8, the terminal device 800 may include: a sending module 810 and a receiving module 820.

The sending module 810 is configured to send a first request message to a first network device, where the first request message includes first identifier information of the terminal device.

The receiving module 820 is configured to receive a first response message sent by the first network device, where the first response message is used to instruct the terminal device to enter an idle state or enter an inactive state.

When the terminal device in this embodiment of this application is in the inactive state, the terminal device sends a request message to the first network device, the first network device instructs the terminal device to directly enter the idle state or the inactive state, and the terminal device does not need to switch to a connected state in advance, so that signaling overheads can be reduced, and power consumption of the terminal device can be reduced.

Optionally, in an embodiment, the first identifier information is inactive state identifier information allocated by a second network device for the terminal device in the inactive state.

Optionally, in an embodiment, when the first response message is used to instruct the terminal device to enter the inactive state, the first response message includes second identifier information allocated by the first network device to the terminal device.

Optionally, in an embodiment, when the first response message is used to instruct the terminal device to enter the inactive state, the first response message includes state indicator information, and the state indicator information is used to instruct the terminal device to enter the inactive state rather than a connected state.

Optionally, in an embodiment, the first request message further includes at least one of second network device identifier information, anchor cell identifier information, service type information, slice indicator information, expected state information, and first cause information.

Optionally, in an embodiment, the first cause information is used to indicate that a cause is update of a radio access network RAN-based notification area RNA.

Optionally, in an embodiment, the first cause information is used to indicate that the cause is periodic update of the RNA.

It should be noted that, in this embodiment of this application, the sending unit 810 and the receiving unit 820 may be implemented by a transceiver, and the terminal device may further include a processor, configured to execute code to implement the method according to this embodiment of this application. As shown in FIG. 9, a terminal device 900 may include a processor 910, a transceiver 920, and a memory 930. The memory 930 may be configured to store code executed by the processor 910, to control the transceiver 920 to perform a corresponding function.

The components in the terminal device 900 may communicate with each other by using an internally connected channel, to transfer a control and/or data signal.

The terminal device 900 shown in FIG. 9 or the terminal device 800 shown in FIG. 8 can implement the processes in the foregoing method embodiments. To avoid repetition, details are not described herein again.

It should be understood that, a terminal device configured to perform the method 700 may also have a similar structure as described above. The terminal device includes: a sending module, configured to send a first request message to a first network device, where the first request message includes first identifier information of the terminal device; and a receiving module, configured to receive a first response message sent by the first network device, where the first response message is used to instruct the terminal device to enter an inactive state to transmit a small data packet. The structure of the terminal device configured to perform the method 700 is not described herein again.

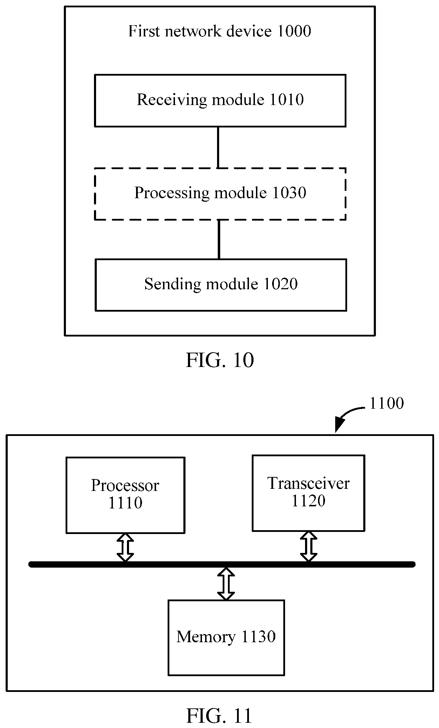

FIG. 10 is a schematic block diagram of a first network device 1000 according to an embodiment of this application. As shown in FIG. 10, the first network device 1000 may include the following modules:
a receiving module 1010, configured to receive a first request message sent by a terminal device in an inactive state, where the first request message includes first identifier information of the terminal device; and
a sending module 1020, configured to send a first response message to the terminal device, where the first response message is used to instruct the terminal device to enter an idle state or enter the inactive state.

The first network device in this embodiment of this application receives a request message sent by the terminal device in the inactive state, the first network device instructs the terminal device to directly enter the idle state or enter the inactive state, and the terminal device does not need to switch to a connected state in advance, so that signaling overheads can be reduced, and power consumption of the terminal device can be reduced.

Optionally, in an embodiment, the first identifier information is inactive state identifier information allocated by a second network device for the terminal device in the inactive state.

Optionally, in an embodiment, when the first response message is used to instruct the terminal device to enter the inactive state, the first response message includes second identifier information allocated by the first network device to the terminal device.

Optionally, in an embodiment, when the first response message is used to instruct the terminal device to enter the inactive state, the first response message includes state indicator information, and the state indicator information is used to instruct the terminal device to enter the inactive state rather than the connected state.

Optionally, in an embodiment, the first request message further includes at least one of second network device identifier information, anchor cell identifier information, service type information, slice indicator information, expected state information, and first cause information.

Optionally, in an embodiment, the first cause information is used to indicate that a cause is update of a radio access network RAN-based notification area RNA.

Optionally, in an embodiment, the first cause information is used to indicate that the cause is periodic update of the RNA.

Optionally, in an embodiment, the first network device further includes a processing module 1030, configured to: before the sending module sends the first response message to the terminal device, determine, based on the first request message, to set the terminal device to the idle state or set the terminal device to the inactive state.

Optionally, in an embodiment, the sending module 1020 is further configured to: when the processing module 1030 determines to set the terminal device to the idle state, send a second request message to the second network device, where the second request message is used to instruct to delete a terminal device context. The receiving module 1010 is further configured to receive a second response message sent by the second network device, where the second response message is used to feed back a result of deleting the terminal device context.

Optionally, in an embodiment, the sending module 1020 is further configured to: when the processing module 1030 determines to set the terminal device to the inactive state, send a third request message to the second network device, where the third request message is used to instruct to request a terminal device context; and the receiving module 1010 is further configured to receive a third response message sent by the second network device, where the third response message is used to feed back the terminal device context.

It should be noted that, in this embodiment of this application, the receiving unit 1010 and the sending unit 1020 may be implemented by a transceiver, and the processing module 1030 may be implemented by a processor. As shown in FIG. 11, the first network device 1100 may include a processor 1110, a transceiver 1120, and a memory 1130. The memory 1130 may be configured to store code executed by the processor 1110, to control the transceiver 1120 to perform a corresponding function.

The components in the first network device 1100 may communicate with each other by using an internally connected channel, to transfer a control and/or data signal.

The first network device 1100 shown in FIG. 11 or the first network device 1000 shown in FIG. 10 can implement the processes implemented in the foregoing method embodiments. To avoid repetition, details are not described herein again.

It should be understood that, a first network device configured to perform the method 700 may also have a similar structure as described above. The first network device includes: a receiving module, configured to receive a first request message sent by a terminal device in an inactive state, where the first request message includes first identifier information of the terminal device; and a sending module, configured to send a first response message to the terminal device, where the first response message is used to instruct the terminal device to enter the inactive state to transmit a small data packet. The structure of the first network device configured to perform the method 700 is not described herein again.

It should be further understood that, the second network device in the embodiments of this application may also have a structure similar to those of the first network devices shown in FIG. 10 and FIG. 11, and details are not described herein again.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each specific application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. A method for controlling a status of a terminal device, comprising:
sending (S310, S410, S510, S610, S710), by a terminal device in an inactive state, a first request message to a first network device, wherein the first request message comprises first identifier information of the terminal device; and
receiving (S320, S450, S550, S630, S750), by the terminal device, a first response message sent by the first network device, wherein the first response message is used to instruct the terminal device to enter an idle state or enter the inactive state;
charaterized in that the first request message further comprises slice indicator information;
wherein when the first response message is used to instruct the terminal device to enter the inactive state, the first response message comprises state indicator information, and the state indicator information is used to instruct the terminal device to enter the inactive state rather than a connected state.

2. The method according to claim 1, wherein when the first response message is used to instruct the terminal device to enter the inactive state, the first response message comprises second identifier information allocated by the first network device to the terminal device.

3. The method according to claim 1 or 2, wherein the first request message further comprises at least one of second network device identifier information, anchor cell identifier information, expected state information, and first cause information.

4. The method according to claim 2, wherein the first cause information is used to indicate that a cause is update of a radio access network RAN-based notification area RNA.

5. A method for controlling a status of a terminal device, comprising:
receiving (S310, S410, S510, S610, S710), by a first network device, a first request message sent by a terminal device in an inactive state, wherein the first request message comprises first identifier information of the terminal device; and
sending (S320, S450, S550, S630, S750), by the first network device, a first response message to the terminal device, wherein the first response message is used to instruct the terminal device to enter an idle state or enter the inactive state;
charaterized in that the method further comprise:
before sending the first response message, determining (S420, S520, S620, S720), by the first network device based on the first request message, to set the terminal device to an idle state or set the terminal device to the inactive state; wherein the first request message further comprises slice indicator information;
wherein when the first response message is used to instruct the terminal device to enter the inactive state, the first response message comprises state indicator information, and the state indicator information is used to instruct the terminal device to enter the inactive state rather than a connected state.

6. The method according to claim 5, wherein when the first response message is used to instruct the terminal device to enter the inactive state, the first response message comprises second identifier information allocated by the first network device to the terminal device.

7. The method according to claim 5 or 6, wherein the first request message further comprises at least one of second network device identifier information, anchor cell identifier information, expected state information, and first cause information.

8. The method according to claim 7, wherein the first cause information is used to indicate that a cause is update of a radio access network RAN-based notification area RNA.

9. A terminal device, comprising means configured to perform the steps of the method of any one of claims 1 to 4.

10. A first network device, comprising means configured to perform the steps of the method of any one of claims 5 to 8.

11. A computer-readable medium storing computer program code which when running on a terminal device causes the terminal device to perform the steps of the method of any one of claims 1 to 4.

12. A computer-readable medium storing computer program code which when running on a first network device causes the first network device to perform the steps of the method of any one of claims 5 to 8.

## Patentansprüche

1. Verfahren zum Steuern eines Zustands einer Endgerätevorrichtung, umfassend:
ein Senden (S310, S410, S510, S610, S710), durch eine Endgerätevorrichtung in einem inaktiven Zustand, einer ersten Anforderungsmitteilung an eine erste Netzwerkvorrichtung, wobei die erste Anforderungsmitteilung erste Kennungsinformationen der Endgerätevorrichtung umfasst; und
ein Empfangen (S320, S450, S550, S630, S750), durch die Endgerätevorrichtung, einer ersten Antwortmitteilung, die von der ersten Netzwerkvorrichtung gesendet wurde, wobei die erste Antwortmitteilung verwendet wird, um die Endgerätevorrichtung anzuweisen, in einen Ruhezustand zu wechseln oder in den inaktiven Zustand zu wechseln;
**dadurch gekennzeichnet, dass** die erste Anforderungsmitteilung ferner Teilungsindikatorinformationen umfasst;
wobei, wenn die erste Antwortmitteilung verwendet wird, um die Endgerätevorrichtung anzuweisen, in den inaktiven Zustand zu wechseln, die erste Antwortmitteilung Statusanzeigeinformationen umfasst, und die Statusanzeigeinformationen verwendet werden, um die Endgerätevorrichtung anzuweisen, in den inaktiven Zustand anstatt in einen verbundenen Zustand zu wechseln.

2. Verfahren nach Anspruch 1, wobei, wenn die erste Antwortmitteilung verwendet wird, um die Endgerätevorrichtung anzuweisen, in den inaktiven Zustand zu wechseln, die erste Antwortmitteilung zweite Kennungsinformationen umfasst, die der Endgerätevorrichtung von der ersten Netzwerkvorrichtung zugewiesen werden.

3. Verfahren nach Anspruch 1 oder 2, wobei die erste Anforderungsmitteilung ferner mindestens eine der zweiten Netzwerkvorrichtungskennungsinformationen, Ankerzellenkennungsinformationen, Informationen des erwarteten Zustands und Informationen zur ersten Ursache umfasst.

4. Verfahren nach Anspruch 2, wobei die Informationen zur ersten Ursache verwendet werden, um anzuzeigen, dass eine Ursache die Aktualisierung einer Funkzugriffsnetzwerk-(radio access network - RAN-)basierten Benachrichtigungsbereich-RNA ist.

5. Verfahren zum Steuern eines Zustands einer Endgerätevorrichtung, umfassend:
das Empfangen (S310, S410, S510, S610, S710), durch eine erste Netzwerkvorrichtung, einer ersten Anforderungsmitteilung, die durch eine Endgerätevorrichtung in einem inaktiven Zustand gesendet wurde, wobei die erste Anforderungsmitteilung erste Kennungsinformationen der Endgerätevorrichtung umfasst; und
das Senden (S320, S450, S550, S630, S750), durch die erste Netzwerkvorrichtung, einer ersten Antwortmitteilung and die Endgerätevorrichtung, wobei die erste Antwortmitteilung verwendet wird, um die Endgerätevorrichtung anzuweisen, in einen Ruhezustand zu wechseln oder in den inaktiven Zustand zu wechseln;
**dadurch gekennzeichnet, dass** das Verfahren ferner Folgendes umfasst:
vor dem Senden der ersten Antwortmitteilung, ein Bestimmen (S420, S520, S620, S720), durch die erste Netzwerkvorrichtung, auf Grundlage der ersten Anforderungsmitteilung, um die Endgerätevorrichtung in einen Ruhezustand zu versetzen oder die Endgerätevorrichtung in den inaktiven Zustand zu versetzen; wobei die erste Anforderungsmitteilung ferner Trennungsindikatorinformationen umfasst;
wobei, wenn die erste Antwortmitteilung verwendet wird, um die Endgerätevorrichtung anzuweisen, in den inaktiven Zustand zu wechseln, die erste Antwortmitteilung Statusanzeigeinformationen umfasst, und die Statusanzeigeinformationen verwendet werden, um die Endgerätevorrichtung anzuweisen, in den inaktiven Zustand anstatt in einen verbundenen Zustand zu wechseln.

6. Verfahren nach Anspruch 5, wobei, wenn die erste Antwortmitteilung verwendet wird, um die Endgerätevorrichtung anzuweisen, in den inaktiven Zustand zu wechseln, die erste Antwortmitteilung zweite Kennungsinformationen umfasst, die der Endgerätevorrichtung von der ersten Netzwerkvorrichtung zugewiesen werden.

7. Verfahren nach Anspruch 5 oder 6, wobei die erste Anforderungsmitteilung ferner mindestens eine der zweiten Netzwerkvorrichtungskennungsinformationen, Ankerzellenkennungsinformationen, Informationen des erwarteten Zustands und Informationen zur ersten Ursache umfasst.

8. Verfahren nach Anspruch 7, wobei die Informationen zur ersten Ursache verwendet werden, um anzuzeigen, dass eine Ursache die Aktualisierung einer Funkzugriffsnetzwerk-(radio access network - RAN-)basierten Benachrichtigungsbereich-RNA ist.

9. Endgerätevorrichtung, umfassend Mittel, die dazu konfiguriert sind, die Schritte des Verfahrens nach einem der Ansprüche 1 bis 4 auszuführen.

10. Erste Netzwerkvorrichtung, umfassend Mittel, die dazu konfiguriert sind, die Schritte des Verfahrens nach einem der Ansprüche 5 bis 8 auszuführen.

11. Computerlesbares Medium, das Computerprogrammcode speichert, der beim Ausführen auf einer Endgerätevorrichtung die Endgerätevorrichtung veranlasst, die folgenden Schritte auszuführen das Verfahren nach einem der Ansprüche 1 bis 4.

12. Computerlesbares Medium, das Computerprogrammcode speichert, der beim Ausführen auf einer ersten Netzwerkvorrichtung die erste Netzwerkvorrichtung veranlasst, die folgenden Schritte auszuführen:das Verfahren nach einem derAnsprüche 5 bis 8.

## Revendications

1. Procédé de contrôle d'un état d'un dispositif terminal, comprenant :
l'envoi (S310, S410, S510, S610, S710), par un dispositif terminal dans un état inactif, d'un premier message de requête à un premier dispositif de réseau, dans lequel le premier message de requête comprend des premières informations d'identifiant du dispositif terminal ; et
la réception (S320, S450, S550, S630, S750), par le dispositif terminal, d'un premier message de réponse envoyé par le premier dispositif de réseau, dans lequel le premier message de réponse est utilisé pour ordonner au dispositif terminal d'entrer dans un état de repos ou d'entrer dans l'état inactif ;
**caractérisé en ce que** le premier message de requête comprend en outre des informations d'indicateur de tranche ;
dans lequel lorsque le premier message de réponse est utilisé pour ordonner au dispositif terminal d'entrer dans l'état inactif, le premier message de réponse comprend des informations d'indicateur d'état, et les informations d'indicateur d'état sont utilisées pour ordonner au dispositif terminal d'entrer dans l'état inactif plutôt que dans un état connecté.

2. Procédé selon la revendication 1, dans lequel, lorsque le premier message de réponse est utilisé pour ordonner au dispositif terminal d'entrer dans l'état inactif, le premier message de réponse comprend des secondes informations d'identifiant allouées par le premier dispositif de réseau au dispositif terminal.

3. Procédé selon la revendication 1 ou 2, dans lequel le premier message de requête comprend en outre au moins l'une parmi des secondes informations d'identifiant de dispositif de réseau, des informations d'identifiant de cellule d'ancrage, des informations d'état attendu et des informations de première cause.

4. Procédé selon la revendication 2, dans lequel les informations de première cause sont utilisées pour indiquer qu'une cause est la mise à jour d'une zone de notification RNA basée sur le réseau d'accès radio RAN.

5. Procédé de contrôle d'un état d'un dispositif terminal, comprenant :
la réception (S310, S410, S510, S610, S710), par un premier dispositif de réseau, d'un premier message de requête envoyé par un dispositif terminal dans un état inactif, dans lequel le premier message de requête comprend des premières informations d'identifiant du dispositif terminal ; et
l'envoi (S320, S450, S550, S630, S750), par le premier dispositif de réseau, d'un premier message de réponse au dispositif terminal, dans lequel le premier message de réponse est utilisé pour ordonner au dispositif terminal d'entrer dans un état de repos ou d'entrer dans l'état inactif ;
**caractérisé en ce que** le procédé comprend en outre :
avant d'envoyer le premier message de réponse, le fait de déterminer (S420, S520, S620, S720), par le premier dispositif de réseau sur la base du premier message de requête, s'il faut mettre le dispositif terminal dans un état de repos ou mettre le dispositif terminal dans l'état inactif ; dans lequel le premier message de requête comprend en outre des informations d'indicateur de tranche ;
dans lequel lorsque le premier message de réponse est utilisé pour ordonner au dispositif terminal d'entrer dans l'état inactif, le premier message de réponse comprend des informations d'indicateur d'état, et les informations d'indicateur d'état sont utilisées pour ordonner au dispositif terminal d'entrer dans l'état inactif plutôt que dans un état connecté.

6. Procédé selon la revendication 5, dans lequel lorsque le premier message de réponse est utilisé pour ordonner au dispositif terminal d'entrer dans l'état inactif, le premier message de réponse comprend des secondes informations d'identifiant allouées par le premier dispositif de réseau au dispositif terminal.

7. Procédé selon la revendication 5 ou 6, dans lequel le premier message de requête comprend en outre au moins l'une parmi des secondes informations d'identifiant de dispositif de réseau, des informations d'identifiant de cellule d'ancrage, des informations d'état attendu et des informations de première cause.

8. Procédé selon la revendication 7, dans lequel les informations de première cause sont utilisées pour indiquer qu'une cause est la mise à jour d'une zone de notification RNA basée sur le réseau d'accès radio RAN.

9. Dispositif terminal, comprenant des moyens conçus pour exécuter les étapes du procédé selon l'une quelconque des revendications 1 à 4.

10. Premier dispositif de réseau, comprenant des moyens conçus pour exécuter les étapes du procédé selon l'une quelconque des revendications 5 à 8.

11. Support lisible par ordinateur stockant un code de programme informatique qui, lorsqu'il est exécuté sur un dispositif terminal, amène le dispositif terminal à exécuter les étapes du procédé selon l'une quelconque des revendications 1 à 4.

12. Support lisible par ordinateur stockant un code de programme informatique qui, lorsqu'il est exécuté sur un premier dispositif de réseau, amène le premier dispositif de réseau à exécuter les étapes du procédé selon l'une quelconque des revendications 5 à 8.
